# EUROPEAN PATENT SPECIFICATION

(11) **EP 2 588 809 B1**
(45) Date of publication and mention of the grant of the patent: **07.11.2018**
(21) Application number: 11746330.7
(22) Date of filing: 29.06.2011
(51) Int. Cl.: F23G 5/32

(54) **METHOD AND SYSTEM FOR LOW-EMISSION INCINERATION OF LOW-CALORIFIC WASTE GAS**
VERFAHREN UND VORRICHTUNG ZUR EMISSIONSARMEN VERBRENNUNG VON ABGAS MIT NIEDRIGEM HEIZWERT
PROCÉDÉ ET SYSTÈME POUR L'INCINÉRATION, À FAIBLE ÉMISSION, DE GAZ RÉSIDUELS FAIBLEMENT CALORIFIQUES

(30) Priority: 02.07.2010 PL 39171510
(43) Date of publication of application: 08.05.2013
(73) Proprietor: ICS Industrial Combustion Systems, 60-349 Poznan (PL)
(72) Inventor: SZEWCZYK, Dariusz, 62-030 Lubon (PL); SUDO, Jun, Miura-Gun, Hayamamachi 240-0111 (JP); BLASIAK, Wlodzimierz, 131 50 Saltsjö-Duvnas (SE); FORSBERG, Lars, 61199 Tystberga (SE); MOCHIDA, Susumu, Kanagawa Pref. 240-0008 (JP); PASIEWICZ, Andrzej, 62-020 Swarzedz (PL)
(74) Representative: Passowicz, Marek
(86) International application number: PCT/PL2011/000064
(87) International publication number: WO 2012/002830

(56) References cited:
- EP-A2- 0 338 183
- WO-A1-2010/060213
- FR-A1- 2 314 441
- US-A- 5 269 235
- US-A1- 2004 093 860

## Description

Method for low-emission incineration of waste gas, particularly low-calorific waste gas, in combustion chambers of industrial power installations and a system of low-emission waste gas incineration, particularly low-calorific gas, in combustion chambers of industrial power installations.

The subject of the invention is a method for low-emission incineration of waste gas, particularly low-calorific waste gas, in combustion chambers of industrial power installations, and a system for application of this method, applicable, particularly, in combustion chambers of reheating furnaces and metallurgical furnaces, as well as heating boilers and power boilers.

Patent No PL139980 discloses a method for combustion of low-calorific waste gases which involves mixing low-calorific gas with high-calorific gas and air, and introducing the mixture tangentially to the surface of the combustion chamber walls, and then swirling and burning, in the process of which the mixture of high-calorific gas and low-calorific gas is heated up to temperature of 973 - 1173K, and then the heated mixture is being swirled and burnt in a combustion chamber, while the generated flue gases are used for heating the gas mixture flowing into the combustion chamber and then diverted to the waste-heat recovery unit. This patent description also presents a furnace for burning low-calorific waste gas, comprising a combustion chamber and separate burners for low-calorific gases and high-calorific gas, and an air nozzle mounted tangentially to the inner surface of the combustion chamber, enclosed at one side with a front wall, and open at the other side, and connected to a reversal chamber and coupled with a toroidal heating and after-burning chamber, connected at the other side, via a cone, to the after-burner chamber with a throat, the combustion chamber being mounted centrally in the furnace by means of radial brackets. In the variant of this type of furnace, the combustion chamber houses at least two burners for low-calorific gas and at least one burner for high-calorific gas; the low-calorific gas burners, high-calorific gas burners and the air nozzle are spaced symmetrically and located symmetrically in the inner, cylindrical surface of the combustion chamber.

The documents WO2010/060213, US4969406 and US5269235 describe methods and systems for incinerating waste gas.

The technical issue to be solved by the present invention is low-emission utilisation of waste gases, particularly, slow-burning waste gases of low calorific value with high contamination contents and high moisture content, as well as the conversion of energy contained in waste gases into heat energy with minimum demand for high-calorific fuel as the fuel supporting the combustion process.

The subject matter of the method of invention is described by claim 1.
In the first variant of the method, in the third combustion section, the waste gas stream is introduced into the combustion system via at least one nozzle located at an angle of 0 - 90° to the longitudinal axis of the combustion system depending on the physicochemical properties of the fuel.

The combustion system according to the invention is described by claim 3.
In a variant of the system, the control element is connected to temperature sensors and the control damper of the high-calorific gas nozzles, the control dampers of the waste gas nozzles, the control damper of air nozzles delivering air to the fourth combustion section and the control damper of the air hose supplying air to the air chamber.
In another variant of the system, the system has at least one branch, where the first section, second section and third section of the combustion system are connected in series; at the same time, the exit of each branch is connected to a common fourth section of the combustion system.

The invention provides a method for the utilisation of waste gases through a safe and stable combustion process, whilst maintaining high power efficiency of the system and extremely low emissions of CO and NOx.
Furthermore, because of the application of different combustion technologies, the combustion system enables:
- burning of waste gases of a very low and variable heating value,
- burning of waste gas fuels of a variable stream, pressure and composition, within a wide range of these parameters, without affecting the quality of the combustion process,
- very low consumption of high-calorific fuel, at a level of approximately 10% of the energy supplied to the system. By converting this into streams, the share of natural gas as a high-calorific fuel with a heating value of 28.58MJ/Nm³ represents less than 1% of the metallurgical-furnace gas stream used as waste gas with a heating value of 2MJ/Nm³.
In the solution according to invention, flame stabilisation is based on the aerodynamic properties of the process conducted according to set velocities and directions for supplying air, high-calorific fuel and utilised waste gases in particular combustion zones and on temperature stabilisation. A considerable part of the combustion process is carried out in a semi-adiabatic combustion chamber above the mixture's self-ignition point.

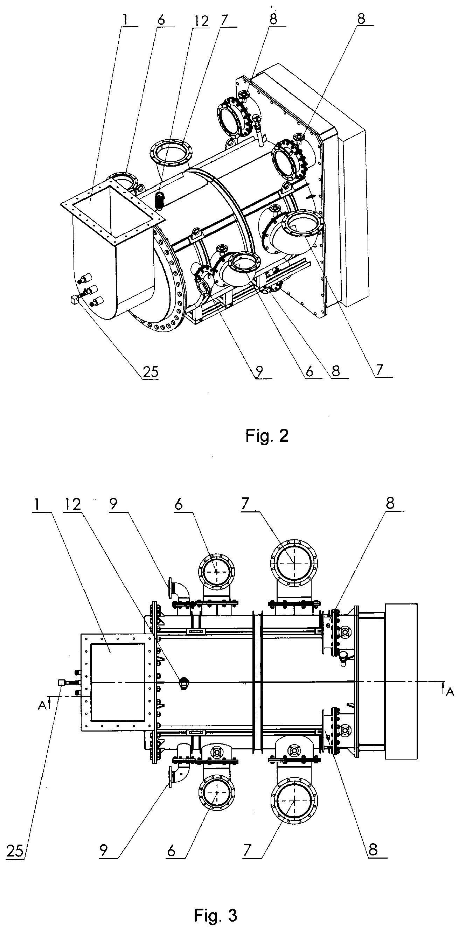

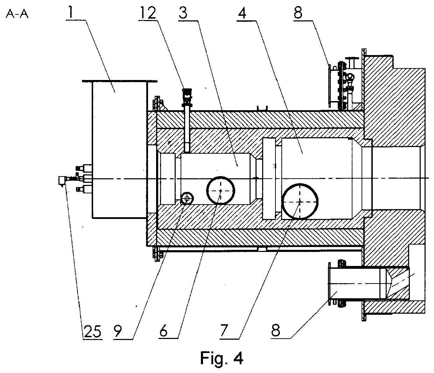

The variant of the invention is explained on drawings, wherein Fig. 1 presents the schematic diagram of the system as the method's variant, Fig. 2 - segment of the combustion system presenting the first and second sections of the combustion system and lances with the nozzle of the third section of the combustion system in an isometric projection, Fig. 3 - segment of the combustion system presenting the first and second sections of the combustion systems and lances with the nozzle of the third section of the combustion system in a top view, Fig. 4 - segment of the combustion system presenting the first and second sections of the combustion system and lances with the nozzle of the third section of the combustion system in a cross-sectional view taken along line A-A.

In the method which involves burning of a mixture of air, high-calorific gas and waste gas, the air chamber is supplied with a continuous air stream at a maximum rate of 20 m/s and at temperature of 0 - 600°C, preferably 300°C, which is subsequently fed into the first combustion section, where the air increases its velocity up to approximately 80 m/s, where it is mixed with a high-calorific fuel supplied at a maximum rate of 25 m/s, preferably 15 m/s, by means of at least one nozzle; next the mixture is ignited by at least one pilot burner, which initiates and supports the flame, while the resulting hot flue gas heats the next sections of the combustion system; when the temperature measured on the walls of the combustion system in the third combustion section, reaches an average temperature above 550°C, the first combustion section is supplied, via at least one nozzle, with waste gas at a maximum rate of 25 m/s, preferably 15 m/s, in a maximum amount of 30%, preferably 17% of the total waste gas stream intended for burning, which mixes with the burning flue gas generated in the course of high-calorific gas combustion. Next, when the temperature measured on the walls of the combustion system in the third combustion section reaches an average value exceeding 650°C, the second combustion section is supplied, via at least one nozzle, with waste gas at a maximum rate of 25 m/s, preferably 15 m/s, in a maximum amount of 50%, preferably 33% of the total waste gas stream intended for combustion, and then, accordingly, when the temperature measured on the walls of the combustion system in the third combustion section reaches an average value exceeding 800°C, the flue gas, fed into the third section of the combustion system at a maximum rate, on the entry of this section, of 120 m/s, preferably 90 m/s and containing air in an amount approximating that needed for stoichiometric burning of high-calorific gas and waste gas supplied in the first, second and third sections of the combustion system, is supplied via at least one nozzle, with the remaining portion of the waste gas stream at a maximum rate of 100 m/s, preferably 80 m/s, in a maximum amount of 70%, preferably 50% of the waste gas stream, and then in the fourth combustion section, the last portion of air is injected via at least two nozzles located on the walls of the combustion chamber, at a maximum rate of 200 m/s, preferably 100 m/s and at temperature of 0 - 600°C, preferably above 300°C, in a maximum amount of 50%, preferably 30% of the total air stream injected into the combustion system, while the flue gas moves in the third and fourth sections of the combustion system with an average volume velocity ranging from a few to a dozen or so m/s at a flue gas temperature of at least 800°C, but not exceeding 1300°C.
In the variant of the method, in the third combustion section, the waste gas stream is introduced into the combustion system via at least one nozzle located at an angle of 0 - 90° in relation to the longitudinal axis of the combustion system depending on the physicochemical properties of the fuel.
The system according to invention, comprising a supply air chamber 1, combustion system 2 with sections 3, 4, 5 and 23 connected in series, pilot burner 12, high-calorific fuel nozzles 9, waste gas nozzles 6, 7, and 8, air nozzles 11, air heater 13, high-calorific gas feeder 15, waste gas feeder 14, control dampers 16, 17, 18, 19, 20 and 21, temperature sensors 22, is characterised in that the first section 3 of the combustion system 2 has a form of a cylindrical cylinder containing at least one pilot burner 12 and at least one high-calorific gas nozzle 9 and at least one waste gas nozzle 6 located parallel to the tangent of the cylindrical cylinder's cross-section, at one side the first section 3 of the combustion system 2 being connected to the supply air chamber 1, and at the other side through a narrowing it couples with the entry to the second section 4 of the combustion system 2, the second section 4 of the combustion system 2 has a form of a cylindrical cylinder which houses at least one waste gas nozzle 7 located parallel to the tangent of the cylindrical cylinder's cross-section, and the exit of the second section of the combustion system is connected, through a narrowing, to the entry of the third section 5 of the combustion system 2. One cylinder contains the third section 5 and the fourth section 23 of the combustion system 2, so that one part of the cylinder constitutes the third section 5 of the combustion system 2, in which at least one waste gas nozzle 8 and at least one temperature sensor 22 of the combustion system are mounted, and the second part of the cylinder constitutes the fourth section 23 of the combustion system 2 with at least two air nozzles 11 mounted therein.
In the system, the supply air chamber 1 is connected to the air heater 13 via a control damper 21.

In the first section 3 of the combustion system 2 each high-calorific gas nozzle 9 is connected to the high-calorific gas feeder 15 via a control damper 16.

In the first section 3 of the combustion system 2, each waste gas nozzle 6 is connected to the waste gas feeder 14 via a control damper 17.
In the second section 4 of the combustion system 2, each waste gas nozzle 7 is connected to the waste gas feeder 14 via a control damper 18.

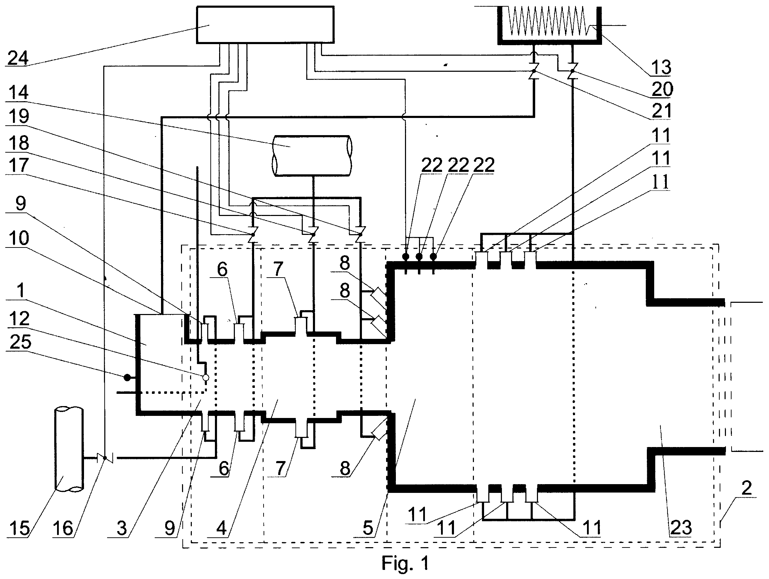

In the third section 5 of the combustion system 2, each waste gas nozzle 8 is connected to the waste gas feeder 14 via a control damper 19.
In the fourth section 23 of the combustion system 2, each air nozzle 11 is connected to an air heater 13 via a control damper 20.
In a variant of the system, the control element 24 is connected to the temperature sensors 22 and the control damper 16 of high-calorific gas nozzles 9, control dampers 17, 18, 19 of waste gas nozzles 6, 7, 8, control damper 20 of air nozzles 11 supplying air to the fourth combustion section 23 and control damper 21 of the air pipe 10 supplying air to the air chamber 1.
In a variant of the system, the system has at least one branch, where the first section 3, second section 4 and third section 5 of the combustion system 2 are connected in series; at the same time, the exit of each branch is connected to a common fourth section 23 of the combustion system 2.
One of technical variants of the method and system for waste gas combustion has been presented, in the form of co-combustion of metallurgical-furnace gas and natural gas as a high-calorific fuel, using the heat energy generated in the course of this process in the form of high-parameter steam. Metallurgical-furnace gas, being a form of waste fuel, is generated in the process of cooper matter smelting in shaft furnaces. Owing to its toxicity, metallurgical-furnace gas cannot be discharged directly to the atmosphere. Utilisation of metallurgical-furnace gas involves burning thereof at high temperatures, whilst minimising the consumption of natural gas as the process-supporting fuel. The installation has been prepared for use with metallurgical-furnace gas which is characterised by such parameters as heat value, content of main gas components, pollutant loading and type, moisture content and pressure that change in real time. The utilisation of metallurgical-furnace gas occurs through the combustion process taking place in a non-cooled combustion chamber. The dimensions of the combustion chamber have been selected to meet the requirements of the minimum residence time of flue gas in the system, amounting to a few seconds, and the maximum flue gas flow rate in the combustion system, which is not more than a few meters per second. The minimum operating temperature of the combustion system has been determined at 800°C, this temperature ensures the combustion of low-calorific gases. The temperature in the system is controlled by the volume of the natural gas delivered. A drop in the system temperature below 800°C causes an increase in the natural gas stream, while a temperature increase exceeding this threshold leads to lowering the natural gas uptake to the minimum flow ensuring stable and reliable operation, that is approximately 20% of the nominal flow. The combustion system is equipped with multistage, dual fuel burners fed by independent media supplying systems, which ensures independent operation of individual burners. Depending on the volume of the stream of metallurgical-furnace gas and natural gas supplied, the amount of air supplied is controlled accordingly. Furthermore, the final oxygen content is controlled by analysers located outside the combustion system on the heat reception side. Behind the gas utilisation system there is a waste-heat recovery exchanger, and, behind it, a flue gas fan, which maintains a steady negative pressure in the combustion system and introduces flue gas to the flue gas desulfurization system. The volume of the metallurgical-furnace gas delivered to the combustion system is controlled by three control dampers; each butterfly valve is responsible for controlling metallurgical-furnace gas flow in a specific section of the combustion system. The volume of the metallurgical-furnace gas stream is measured by means of impact tubes, called annubars. The required pressure in the pipe feeding the combustion system ranges from 2kPa to 12.5 kPa. The nominal pressure is 4.5 kPa for a nominal metallurgical-furnace gas flow of 21,666 Nm³/h per burner, which in the case of the three burners installed totals 65,000 Nm³/h, at a negative pressure in the combustion chamber equal to 0.1 kPa.
The air heated in the recuperator to a maximum temperature of 350°C separates into two streams: the first stream feeds the first, second and third combustion section and the second stream feeds the fourth combustion section. The first air stream for combustion at approximately 70% of the total air stream volume is injected into the combustion system through the burners. The required air pressure ensuring proper functioning of the burners ranges from 2.5 kPa to 7 kPa, nominal pressure is 5 kPa, and the flow rate for each burner approximates 10.000 Nm³/h, for the burner's nominal operating conditions.
The second air stream is delivered directly to the combustion system, to the fourth combustion section, via 2 - 6 nozzles located on the lateral walls of the combustion chamber, causing additional swirling of gas masses inside the chamber. The required air pressure for the fourth combustion section to function properly is from 2.5 kPa to 7 kPa, nominal pressure is 5 kPa, and the nominal air flow rate for this combustion section is a few thousand Nm³/h. This method of supplying air to the system in the fourth combustion section increases the intensity of the generated vortex, and thereby prolongs the residence time of flue gas in the combustion chamber. The division of the air streams causes an increase in the temperature in the third combustion section, which is essential for intensifying the metallurgical-furnace gas combustion process. The second air stream supplied to the fourth combustion section approximates 30% of the total volume of the air stream delivered to the system. The volume of air is controlled by control dampers according to the measurements being performed. In the case of a smaller demand for air in the fourth combustion section or due to a lower power output of the system, air is delivered only to selected nozzles, which ensures maintaining relevant velocities within a wide scope of changes in the system's operation.
In the system according to invention, the process of burning metallurgical-furnace gas together with natural gas is conducted at multiple stages in three dual fuel burners. The schematic diagram of the combustion process is presented in Fig. 1.
In the first section 3 of the combustion system 2, air for the first combustion stage is fed through the air chamber 1. Natural gas, through the nozzles 9 is delivered perpendicularly to the air stream and tangentially to the walls of the first combustion section 3. The resulting mixture is ignited by means of a pilot burner 12. In order to deliver a natural gas stream to the combustion system 2 via the nozzles 9, the pilot burner 12 must be operative. After activating pilot burner 12 it is recommended to wait a few minutes before introducing natural gas from the feeder 15. A few seconds after initiating the supply of natural gas to nozzles 9, control of flame presence is carried out by means of a UV probe 25 installed on the back wall of the burner. If the UV probe 25 fails to confirm the presence of a flame at a system temperature below 800°C, the supply of natural gas to the nozzles 9 is cut off. For natural gas to be delivered to the nozzles 9 at temperatures in the combustion system above 750°C, the pilot burner 12 must function properly or the UV probe 25 must confirm the presence of a flame in burner 2.
Upon exceeding the temperature of 800°C the role of the flame control is to measure the temperature on the walls of the combustion chamber, and at the same time the UV probe and ionising probe located in the pilot burner are relieved of this role. This procedure results in an enhanced reliability of the system's operation and system's insensitivity to gas stream fluctuations in terms of their composition, pressure, temperature, pollutant load and moisture content. When the temperature of the system exceeds 800°C, temporary supply of natural gas to nozzles 9, in the absence of a positive signal from the pilot burner 12 and UV probe 25, is acceptable. Because of the ceramic lining of the system's interior 2, the system must be heated gradually, in line with the relevant heating curve, and cooled down in accordance with the cooling curve. Upon activation, a combustion system 2, whose inner temperature is lower than the nominal temperature, must be heated gradually in accordance with the heating curve, and its operation at maximum output is not possible from the very start.
After a specific amount of time since the first delivery of natural gas to nozzles 9, after reaching a temperature above 550°C, measured by a temperature sensor 22 on the walls of the third section 5 of the combustion system, metallurgical-furnace gas is fed into the waste gas nozzles 6, tangentially to the inner surface of the walls of the combustion section 4. The flame, produced as a result of natural gas combustion, ignites the metallurgical-furnace gas. In order to deliver metallurgical-furnace gas to the combustion system 2, pilot burner 12 must be working and supplied with natural gas. It is assumed that the pilot burner 12 operates in a continuous mode within the entire operational range of the combustion system.
In the second section 4 of the combustion system 2 after a certain period of stable operation of the first section 3 of the combustion system 2, after achieving a temperature above 650°C, measured on the walls of the combustion chamber in the third section 5 of the combustion system 2 metallurgical-furnace gas is delivered via nozzles 7. Metallurgical-furnace gas, delivered tangentially to the inner wall of the combustion system, in the second section 4 of the combustion system 2, is ignited by a flame produced in the first section 3 of the combustion system 2. Under nominal operating conditions approximately 50 % of the metallurgical-furnace gas is delivered to the waste gas nozzles 6 and 7 located in the first and second sections 3 and 4 of the combustion system 2. The first section 3 of the combustion system 2 is supplied with, for example up to 17% of the metallurgical-furnace gas, while the second section 4 of the combustion system 2 with up to 33% of the nominal metallurgical-furnace gas stream utilised in the system.
In the third section 5 of the combustion system 2 metallurgical-furnace gas is delivered directly to the combustion chamber, where it is mixed with a stream of partially-burnt gasses from the first and second combustion sections, whose maximum velocity is 120 m/s, preferably 90 m/s, and with flue gas present in the combustion chamber, and burns gradually. The supply of metallurgical-furnace gas via nozzles 8 is initiated upon reaching a temperature of 800°C measured on the walls of the combustion system in the third combustion section. The air volume delivered to the first, second and third sections 3, 4 and 5 of the combustion system 2 approximates the stoichiometric amount. This amount of air suffices to attain a relatively high temperature in the third section 5 of the combustion system 2, required for the waste gas utilisation process. The generation of such a temperature allows obtaining adequate quality of the combustion process and providing for its adequate intensity.
In the fourth section 23 of the combustion system 2, the remaining portion of air is delivered, that is, for example about 30% of the total air stream for combustion. The air stream is fed via nozzles 11 distributed at different levels on the walls of the combustion chamber and directed at an angle to the combustion chamber walls in order to enhance the inner vortex, which guarantees the intensification of the gas mixing processes, increase residence time of gasses in the chamber and afterburn the underburnt compounds from the previous sections 3, 4 and 5 of the combustion system 2, the aim of which is to maximise the quality of the combustion process.
The solution according to invention does not require the use of mechanical parts, such as paddles or plates for swirling the stream and stabilising the flame. The use of such elements, in the presence of polluted and aggressive gasses, in conjunction with high temperature causes fast degradation and damage thereof, or in the best case, deposits accumulating on these parts cause rapid obstruction of burners, and consequently - failure and stoppage of the entire utilisation system.

## Claims

1. A method for low-emission incineration of waste gases, particularly of low calorific value in combustion chambers of industrial power equipment, in the course of which a mixture of waste gas, high calorific fuel and air is subjected to combustion in a system (2) comprising a supply air chamber (1), a combustion system with four sections (3, 4, 5, 23) connected in series, waste gas feeder (14), high calorific value gas feeder (15), control butterfly valves (16, 17, 18, 19, 20, 21), high calorific value gas nozzles (9), waste gas nozzles (6, 7, 8), pilot burner (12), air heater (13), temperature sensors (22) and control device (24), **characterized in that** the air chamber is supplied with a continuous stream of air at a rate of 20 m/s and a temperature of 0 - 600°C, preferably above 300°C, which is subsequently delivered to the first combustion section (3), where the air velocity increases to approximately 80 m/s and where it is mixed with high calorific value fuel supplied at a rate of up to 25 m/s, preferably at 15 m/s, via at least one nozzle (9), afterwards the mixture is ignited by means of at least one pilot burner (12), which initiates and sustains the flame, and the resulting hot flue gases heat the next sections of the combustion system, and when the temperature measured on the walls of the combustion system, in the third section (5) of the combustion system, exceeds 550°C, the first section (3) of the combustion system is supplied via at least one nozzle with waste gas at a maximum rate of 25 m/s, preferably 15 m/s, in a maximum amount of 30%, preferably 17% of the total waste gas stream intended for combustion, which mixes with the burning flue gases generated from high calorific value fuel, and when the temperature measured on the walls of the combustion system in the third combustion section (5) exceeds 650°C, the second combustion section (4) is supplied, via at least one nozzle (7), with waste gas at a maximum rate of 25 m/s, preferably 15 m/s, in a maximum amount of 50%, preferably 33% of the total waste gas stream intended for combustion, and afterwards, when the temperature measured on the walls of the combustion system in the third combustion section (5) exceeds 800°C, the partially burnt gases from the first and the second sections (3 and 4) are fed into the third section (5) of the combustion system at a maximum rate of 120 m/s, preferably 90 m/s and is set to contain air in an amount approximating that needed for stoichiometric burning of high calorific value gas and waste gas supplied in the first, second and third section (3, 4 and 5) of the combustion system, the remaining portion of the waste gas stream is fed via at least one nozzle (8) at a maximum rate of 100 m/s, preferably 80 m/s, and a maximum amount of 75%, preferably 50% of the waste gas stream, in the fourth combustion section (23), and then the last portion of air is injected via at least two nozzles (11) located on the walls of the combustion chamber, at a maximum rate of 200 m/s, preferably 100 m/s and a temperature of 0 - 600°C, preferably above 300°C, in a maximum amount of 50%, preferably 30% of the total air stream introduced into the combustion process, while the temperature of the flue gas discharged from the combustion system is at least 800°C and does not exceed 1300°C, the combustion chambers being at a negative pressure of approximately 0.1 kPa.

2. The method according to claim 1 **characterized in that** in the third combustion section (5) a waste gas stream is introduced into the combustion system (2) via at least one nozzle (8) at an angle of 0 - 90° to the longitudinal axis of the combustion system depending on the physicochemical properties of the fuel.

3. A system (2) for low-emission incineration of waste gases, particularly of low calorific value, in combustion chambers of industrial power equipment, comprising a supply air chamber (1), a combustion system with four sections (3, 4, 5, 23) connected in series, waste gas feeder (14), high calorific value gas feeder (15), control butterfly valves (16, 17, 18, 19, 20, 21), pilot burner (12), high calorific value gas nozzles (9), waste gas nozzles (6, 7, 8), air heater (13), temperature sensors (22) and control device (24), **characterized in that:**
• the first section (3) of the combustion system (2) has the form of a cylinder which houses at least one pilot burner (12) and at least one high calorific value gas nozzle (9) and at least one waste gas nozzle (6), located parallel to the tangent of the cylindrical cylinder's cross-section, and at one side is connected to the supply air chamber (1), and at the other side it couples, through a narrowing, with the entrance of the second section (4) of the combustion system (2),
• the second section (4) of the combustion system (2) has the form of a cylinder which houses at least one waste gas nozzle (7) located parallel to the tangent of the cylindrical cylinder's cross-section, and the exit thereof is connected, through a narrowing, with the entrance of the third section (5) of the combustion system (2),
• the third section (5) and the fourth section (23) of the combustion system (2) are situated in one cylinder, so that one part of the cylinder constitutes the third section (5) of the combustion system (2), housing at least one waste gas nozzle (8) and at least one temperature sensor (22) of the combustion system (2), while the other part of the cylinder constitutes the fourth section (23) of the combustion system (2) where at least two air nozzles (11) are mounted,
• the air chamber (1) is connected to the air heater (13) via a control butterfly valve (21),
• in the first section (3) of the combustion system (2) each high calorific value gas nozzle (9) is connected to the high calorific value gas feeder (15) via a control butterfly valve (16),
• in the first section (3) of the combustion system (2), each waste gas nozzle (6) is connected to the waste gas feeder (14) via a control butterfly valve (17),
• in the second section (4) of the combustion system (2), each waste gas nozzle (7) is connected to the waste gas feeder (14) via a control butterfly valve (18),
• in the third section (5) of the combustion system (2) each waste gas nozzle (8) is connected to a waste gas feeder (14) via a control butterfly valve (19),
• in the fourth section (23) of the combustion system (2) each air nozzle (11) is connected to an air heater (13) via a control butterfly valve (20).

4. The system according to claim 3, **characterized in that** the control element (24) is connected to temperature sensors (22) and the control butterfly valve (16) of high calorific value gas nozzles (9), control butterfly valves (17, 18, 19) of waste gas nozzles (6, 7, 8), control butterfly valve (20) of air nozzles supplying air to the fourth combustion section (23) and control butterfly valve (21) of the air pipe supplying air to the air chamber (1).

5. The system according to claim 3, **characterized in that** the said system has at least one branch, where the first section (3), second section (4) and third section (5) of the combustion system (2) are connected in series and at the same time, the exit of each branch is connected to a common fourth section (23) of the combustion system (2).

## Patentansprüche

1. Ein Verfahren zur emissionsarmen Verbrennung von insbesondere kalorienarmen Abgasen in Brennkammern von Industriekraftanlagen, bei dem ein Gemisch von Abgas, vollwertigem Brennstoff und Luft der Verbrennung im Verbrennungssystem (2) unterzogen wird, das eine Zuluftkammer (1), ein Verbrennungssystem mit vier in Reihe geschalteten Verbrennungssektionen (3, 4, 5, 23), eine Abgasversorgung (14), eine Brennstoffversorgung (15), Regulierklappen (16, 17, 18, 19, 20, 21), Brennstoffdüsen (9), Abgasdüsen (6, 7, 8), einen Zündbrenner (12), einen Luftvorwärmer (13), Temperatursensoren (22) und ein Steuerelement (24) umfasst, **dadurch gekennzeichnet, dass** der Zuluftkammer ein kontinuierlicher Luftstrom mit einer Geschwindigkeit von bis zu 20 m/s und einer Temperatur von 0 bis 600°C, vorzugsweise über 300°C, zugeführt wird, der dann der ersten Verbrennungssektion (3) zugeführt wird, wo die Luftgeschwindigkeit auf etwa 80 m/s erhöht wird, und wo die Luft mit dem vollwertigen Brennstoff gemischt wird, der mit einer Geschwindigkeit von bis zu 25 m/s, vorzugsweise 15 m/s, mit Hilfe von mindestens einer Düse (9) zugeführt wird, wonach dieses Gemisch mit Hilfe von mindestens einem Zündbrenner (12) gezündet wird, der die Flamme initiiert und aufrechterhält, anschließend die so erhaltenen heißen Verbrennungsgase die nacheinander folgenden Verbrennungssektionen im Verbrennungssystem erwärmen, und wenn die an den Wänden des Verbrennungssystems in seiner dritten Verbrennungssektion (5) gemessene Temperatur einen Wert von über 550°C erreicht hat, der ersten Verbrennungssektion (3) des Verbrennungssystems das Abgas mit einer Geschwindigkeit von bis zu 25 m/s, vorzugsweise 15 m/s, in einer Menge von bis zu 30%, vorzugsweise 17% seiner gesamten, zur Verbrennung bestimmten Strömung mittels mindestens einer Düse (6, 7, 8) zugeführt wird, das sich mit dem brennenden, aus vollwertigem Brennstoff entstandenen Rauchgas mischt, und dann, wenn die an den Wänden in der dritten Verbrennungssektion (5) des Verbrennungssystems gemessene Temperatur einen Wert von über 650 °C erreicht hat, das Abgas mittels mindestens einer Düse (7), mit einer Geschwindigkeit von bis zu 25 m/s, vorzugsweise 15 m/s, in einer Menge von bis zu 50%, vorzugsweise 33% seiner zur Verbrennung bestimmten Strömung der zweiten Verbrennungssektion (4) des Verbrennungssystems zugeführt wird, wonach entsprechend, wenn die an den Wänden in der dritten Verbrennungssektion (5) des Verbrennungssystems gemessene Temperatur einen Wert von über 800° C erreicht hat, die teilweise verbrannten Gase aus der ersten und der zweiten Verbrennungssektion (3 und 4) des Verbrennungssystems mit einer maximalen Geschwindigkeit von 120 m/s, vorzugsweise 90 m/s der dritten Verbrennungssektion (5) des Verbrennungssystems zugeführt und so eingestellt werden, dass sie die Luft in einer Menge enthalten, die nahe derjenigen ist, die für die stöchiometrische Verbrennung von vollwertigem Brennstoff und Abgas benötigt wird, die der ersten, zweiten und dritten Verbrennungssektion (3, 4 und 5) des Verbrennungssystems zugeführt werden, der restliche Teil des Abgasstroms über mindestens eine Düse (8) mit einer maximalen Geschwindigkeit von 100 m/s, vorzugsweise 80 m/s, und einer maximalen Menge von 75%, vorzugsweise 50% des Abgasstroms zugeführt wird, und dann in die vierte Verbrennungssektion (23) die letzte Luftmenge über mindestens zwei an den Wänden der Brennkammer angeordnete Düsen (11) mit einer maximalen Geschwindigkeit von 200 m/s, vorzugsweise 100 m/s und einer Temperatur von 0 bis 600°C, vorzugsweise über 300°C, in einer maximalen Menge von 50%, vorzugsweise 30% des gesamten in den Verbrennungsprozess eingebrachten Luftstroms injiziert wird, während der Temperatur des aus dem Verbrennungssystem ausgestoßenen Rauchgases mindestens 800°C beträgt und nicht 1300°C überschreitet, wobei die Verbrennungskammern einen Unterdruck von etwa 0,1 kPa aufweisen.

2. Ein Verfahren nach Anspruch 1, **dadurch gekennzeichnet, dass** in der dritten Verbrennungssektion (5) der Abgasstrom in das Verbrennungssystem (2) mit mindestens einer Düse (8) in einem Winkel von 0 bis 90° zur Längsachse des Verbrennungssystems gerichtet, in Abhängigkeit von chemischen und physikalischen Eigenschaften des Brennstoffs eingeführt wird.

3. Ein System (2) zur emissionsarmen Verbrennung von insbesondere kalorienarmen Abgasen in Verbrennungskammern der Industriekraftanlagen, das eine Zuluftkammer (1), ein segmentartiges Verbrennungssystem mit vier in Reihe geschalteten Verbrennungskammern (3, 4, 5, 23), Abgasdüsen (6, 7, 8), Brennstoffdüsen (9), einen Zündbrenner (12), einen Luftvorwärmer (13), eine Abgasversorgung (14), eine Brennstoffversorgung (15), Regulierklappen (16, 17, 18, 19, 20, 21), Temperatursensoren (22) und ein Regelelement beinhaltet (24), **dadurch gekennzeichnet, dass:**
das erste Segment (3) des Verbrennungssystems (2) die Form eines Zylinders aufweist, in dem mindestens ein Zündbrenner (12), mindestens eine Brennstoffdüse (9) und zumindest eine Abgasdüse (6) entlang der zur Tangenten des Zylinderquerschnitts parallelen Achse angeordnet sind, einerseits mit der Zuluftkammer (1) und andererseits durch eine Verengung mit dem Einlauf des zweiten Segments (4) des Verbrennungssystems (2) verbunden ist,.
- das zweite Segment (4) des Verbrennungssystems (2) die Form eines Zylinders aufweist, in dem mindestens eine Abgasdüse (7) entlang der zur Tangenten des Zylinderquerschnitts parallelen Achse angeordnet ist, während sein Auslauf mittels einer Verengung mit dem Einlauf des dritten Segments (5) des Verbrennungssystems (2) verbunden ist,
- das dritte (5) und das vierte Verbrennungssegment (23) des Verbrennungssystems (2) in einem Zylinder angeordnet sind, so dass ein Teil des Zylinders das dritte Verbrennungssegment (5) des Verbrennungssystems (2) bildet, wo mindestens eine Abgasdüse (8) und mindestens ein Temperatursensor (22) des Verbrennungssystems (2) angeordnet sind, während der andere Teil des Zylinders das vierte Verbrennungssegment (23) des Verbrennungssystems (2) bildet, wo mindestens zwei Luftdüsen (11) montiert sind,
- die Zuluftkammer (1) über eine Regulierklappe (21) mit dem Luftvorwärmer (13) verbunden ist,
- im ersten Segment (3) des Verbrennungssystems (2) jede Brennstoffdüse (9) mit der Brennstoffversorgung (15) über eine Regulierklappe (16) verbunden ist,
- im ersten Segment (3) des Verbrennungssystems (2) jede Abgasdüse (6) mit der Abgasversorgung (14) über eine Regulierklappe (17) verbunden ist,
- im zweiten Segment (4) des Verbrennungssystems (2), jede Abgasdüse (7) mit der Abgasversorgung (14) über eine Regulierklappe (18) verbunden ist,
- im dritten Segment (5) des Verbrennungssystems (2), jede Abgasdüse (8) mit der Abgasversorgung (14) über eine Regulierklappe (19) verbunden ist,
- im vierten Segment (23) des Verbrennungssystems (2) jede Luftdüse (11) mit dem Luftvorwärmer (13) über eine Regulierklappe (20) verbunden ist.

4. Ein System nach Anspruch 3, **dadurch gekennzeichnet, dass** das Steuerelement (24) mit Temperatursensoren (22) und der Regulierklappe (16) der Brennstoffdüsen (9), Regulierklappen (17, 18, 19), der Abgasdüsen (6, 7, 8), der Regulierklappe (20), der Düsen der zum vierten Verbrennungssegment (23) zugeführten Luft und der Regulierklappe (21) der Luftzufuhrleitung der Zuluftkammer (1) verbunden ist.

5. Ein System nach Anspruch 3, **dadurch gekennzeichnet, dass** es zumindest einen Zweig hat, in dem das erste Segment (3), das zweite Segment (4) und das dritte Segment (5) des Verbrennungssystems (2) in Reihe geschaltet sind, während der Auslauf des jeden Zweiges mit einem gemeinsamen vierten Segment (23) des Verbrennungssystems (2) verbunden ist.

## Revendications

1. Un procédé de combustion à faible émission des gaz résiduaires, en particulier de ceux hypocaloriques, dans les chambres de combustion des installations énergétiques industrielles, dans lequel un mélange du gaz résiduaire, du combustible de valeur complète et de l'air est soumis à la combustion dans un système (2) comprenant une chambre à air d'alimentation (1), un système de combustion à quatre sections (3, 4, 5, 23) connectées mutuellement en série, un bloc d'alimentation en gaz résiduaire (14), un bloc d'alimentation en combustible de valeur complète (15), des obturateurs de régulation (16, 17, 18, 19, 20, 21), des buses de combustible de valeur complète (9), des buses de gaz résiduaire (6, 7, 8), un brûleur pilote (12), un préchauffeur d'air (13), des capteurs de température (22) et un élément de commande (24), **caractérisé en ce qu'**un courant d'air continu est introduit dans la chambre à air, à une vitesse de 20 m/s maximum et à une température de 0 à 600 °C, de préférence supérieure à 300 °C, qui est ensuite introduit dans la première section de combustion (3), dans laquelle la vitesse de l'air est augmentée jusqu'à 80 m/s environ et où l'air est mélangée avec le combustible de valeur complète qui est introduit à une vitesse de 25 m/s maximum, de préférence 15 m/s, à l'aide d'une buse (9) au moins, et ensuite le mélange est allumé à l'aide d'un brûleur pilote (12) au moins qui initie et maintient la flamme, tandis que les gaz de combustion chauds ainsi obtenus échauffent les sections successives dans le système de combustion, et lorsque la température mesurée sur les parois du système de combustion dans sa troisième section (5) a atteint une température supérieure à 550 °C, le gaz résiduaire est introduit dans la première section (3) du système de combustion par l'intermédiaire d'une buse au moins, à une vitesse de 25 m/s maximum, de préférence 15 m/s, en une quantité de 30% maximum, de préférence 17% de son flux complet destiné à brûler, ce qui est mélangé avec les gaz brûlants provenant de la combustion du combustible de valeur complète, et puis, lorsque la température mesurée sur les parois dans la troisième section (5) du système de combustion a atteint la température supérieure à 650 °C, le gaz résiduaire est introduit dans la seconde section (4) du système de combustion par l'intermédiaire d'une buse de gaz résiduaire (7) au moins, à une vitesse de 25 m/s maximum, de préférence 15 m/s, en une quantité de 50%, de préférence 33% de son flux complet destiné à brûler, et en conséquence, lorsque la température mesurée sur les parois de la troisième section (5) du système de combustion a atteint une valeur supérieure à **800 °C,** les gaz partiellement brûlés de la première et de la seconde section (3 et 4) sont introduits dans la troisième section (5) du système de combustion à une vitesse de 120 m/s maximum, de préférence 90 m/s, et sont réglés pour contenir de l'air en quantité proche de celle requise pour la combustion stoechiométrique du combustible de valeur complète et du gaz résiduaire fournis dans la première, la deuxième et la troisième section (3, 4 et 5) du système de combustion, la partie restante du flux de gaz résiduaire est introduite par au moins une buse (8), à une vitesse maximale de 100 m/s, de préférence 80 m/s, et une quantité maximale de 75%, de préférence 50% du flux de gaz résiduaires, dans la quatrième section de combustion (23) et ensuite la dernière partie de l'air est injectée par au moins deux buses (11) situées sur les parois de la chambre de combustion, à une vitesse de 200 m/s maximum, de préférence 100 m/s et à une température de 0 à 600 °C, de préférence supérieure à 300 °C, en une quantité de 50% maximum, de préférence 30% du flux d'air total introduit dans le processus de combustion, tandis que la température du flux des gaz de combustion déchargées du système de combustion est de 800 oC au moins et ne dépasse pas 1300 oC, les chambres de combustion étant à une pression négative de 0,1 kPa environ.

2. Un procédé selon la revendication 1, **caractérisé en ce que,** dans la troisième section de combustion (5), un flux de gaz résiduaire est introduit dans le système de combustion (2) par une buse (8) au moins, sous un angle allant de 0 à 90 °par rapport à l'axe longitudinal du système de combustion, en fonction des propriétés physico-chimiques du combustible.

3. Un système (2) de combustion à faible émission des gaz résiduaires, en particulier des gaz hypocaloriques, dans les chambres de combustion des installations énergétiques industrielles, comprenant une chambre à air d'alimentation (1), un système de combustion segmenté à quatre chambres de combustion (3, 4, 5, 23) reliées entre elles en série, des buses de gaz résiduaire (6 ,7, 8), des buses de combustible de valeur complète (9), un brûleur pilote (12), un préchauffeur d'air (13), un bloc d'alimentation en gaz résiduaire (14), un bloc d'alimentation en combustible de valeur complète (15), des obturateurs de régulation (16, 17, 18, 19, 20, 21), des capteurs de température (22) et un élément de commande (24), **caractérisé en ce que :**
- la première section (3) du système de combustion (2) ayant la forme d'un corps cylindrique dans lequel un brûleur pilote (12) au moins, une buse de combustible de valeur complète (9) au moins et une buse de gaz résiduaire (6) au moins sont installés, orientés le long d'un axe parallèle à la tangente de la section transversale du corps cylindrique, est connecté à la chambre à air d'alimentation (1) d'une part et, par l'intermédiaire d'un étranglement, est connecté à l'entrée du second segment (4) du système de combustion (2) d'autre part,
- la deuxième section (4) du système de combustion (2) ayant la forme d'un corps cylindrique dans lequel une buse de gaz résiduaire (7) au moins est installée, orientée le long d'un axe parallèle à la tangente de la section transversale du corps cylindrique, pendant que sa sortie est connectée par l'intermédiaire d'un étranglement à l'entrée du troisième segment (5) du système de combustion (2),
- la troisième section (5) et la quatrième section (23) du système de combustion (2) sont situées dans un seul cylindre, de sorte qu'une partie du cylindre constitue la troisième section (5) du système de combustion (2), dans laquelle une buse de gaz résiduaire (8) au moins et un capteur de température (22) au moins du système de combustion (2) sont situés, tandis que l'autre partie du cylindre constitue la quatrième section (23) du système de combustion (2), dans laquelle deux buses d'air (11) au moins sont montées,
- la chambre à air (1) d'alimentation est raccordée au préchauffeur d'air (13) par l'intermédiaire d'un obturateur de régulation (21),
- dans la première sectiont (3) du système de combustion (2), chaque buse de combustible de valeur complète (9) est connectée au bloc d'alimentation en combustible de valeur complète (15) par l'intermédiaire d'un obturateur de régulation (16),
- dans la première section (3) du système de combustion (2), chaque buse de gaz résiduaire (6) est connectée au bloc d'alimentation en gaz résiduaire (14) par l'intermédiaire d'un obturateur de régulation (17),
- dans la deuxième section (4) du système de combustion (2), chaque buse de gaz résiduaire (7) est connectée au bloc d'alimentation en gaz résiduaire (14) par l'intermédiaire d'un obturateur de régulation (18),
- dans la troisième section (5) du système de combustion (2), chaque buse de gaz résiduaire (8) est connectée au bloc d'alimentation en gaz résiduaire (14) par l'intermédiaire d'un obturateur de régulation (19),
- dans la quatrième section (23) du système de combustion (2), chaque buse d'air (11) est connectée au préchauffeur d'air (13) par l'intermédiaire d'un obturateur de régulation (20).

4. Un système selon la revendication 3, **caractérisé en ce que** l'élément de commande (24) est connecté aux capteurs de température (22) et à l'obturateur de régulation (16) des buses de combustible de valeur complète (9), aux obturateurs de régulation (17, 18, 19) des buses de gaz résiduaire (6, 7, 8), à l'obturateur de régulation (20) des buses de l'air fournie à la quatrième section de combustion (23) et à l'obturateur de régulation (21) du conduit d'alimentation en air de la chambre à air (1).

5. Un système selon la revendication 3, **caractérisé en ce qu'**il a une branche au moins, dans laquelle la première section (3), la deuxième section (4) et la troisième section (5) du système de combustion (2) sont connectés en série, tandis que la sortie de chaque branche est connectée à la quatrième section commune (23) du système de combustion (2).
